# EUROPEAN PATENT APPLICATION

(11) **EP 0 666 135 A1**
(43) Date of publication of application: **09.08.1995**
(21) Application number: 95300604.6
(22) Date of filing: 31.01.1995
(51) Int. Cl.: B23Q 9/00, B23B 47/28

(54) **A drilling system**

(30) Priority: 04.02.1994 GB 9402123
(71) Applicant: Black & Decker Inc., Newark Delaware 19711 (US)
(72) Inventor: Cuneo, Giuseppe, I-24032 Calolziocorte, (Bergamo) (IT)
(74) Representative: Stagg, Diana Christine

(57) **Abstract**

A multiple hole drilling system 1 comprising a frame 3, drive means 11,13 for driving a plurality of drill bits 15 into a workpiece 19 to produce drill holes and a rail 5, wherein the frame 3 is mounted on the rail 5 for movement along the rail 5 substantially perpendicularly to the axis of the drill bits 15. By using such a drilling system, controlled and accurate drilling of a workpiece can be achieved.

## Description

This invention relates to drilling devices, and in particular to a drilling device mounted on a rail for movement therealong.

A hand-held multiple hole drilling device which is particularly suitable for drilling dowel holes in workpieces, so that two workpieces can be joined together by dowel joints is disclosed in our co-pending U.K. Patent Application No. 9402120.1.

In brief, this drilling device comprises a frame and drive means mounted on the frame for driving a plurality of drill bits through the frame into a workpiece. Extension arms can be used with the frame to facilitate correct positioning of groups of drill holes in a workpiece. In this regard, an extension arm includes a stud which engages a hole already drilled in a workpiece so that the distance of the next group of drill holes from the last hole already drilled can be accurately determined. A preferred arrangement of an extension arm is described in our co-pending U.K. Patent Application No. 9402121.9.

Although the applicant's hand-held drilling device is very useful and convenient, it would also be useful to have such a drilling device mounted on some support for workshop use or the like. Accordingly, the present invention has been made to satisfy this requirement.

According to the present invention, there is provided a multiple hole drilling system comprising a frame, drive means mounted on the frame for driving a plurality of drill bits into a workpiece to produce drill holes and a rail, wherein the frame is mounted on the rail for movement along the rail substantially perpendicularly to the axis of the drill bits. As a result of the present invention, a plurality of groups of drill holes can be formed in a workpiece in a single row easily and accurately.

Runners are preferably provided for supporting the frame on the rail. Alternatively, flanges extending from the frame could simply be received in longitudinal grooves of the rail.

If runners are used, the runners preferably comprise ball bearing races mounted on the frame.

A motorised drive may be provided for moving the frame along the rail. If a motorised drive is used, a computer may be programmed to dictate the position of the frame along the rail by controlling the motorised drive. Such an arrangement may be particularly useful if the drilling system is being used in a factory during large scale manufacture of certain goods.

Stop means are preferably provided at an end of the rail against which a workpiece abuts during drilling. Preferably the stop means include a pair of stops, the position of each being adjustable.

Clamp means may be provided at an end of the rail for gripping a workpiece, during drilling. More preferably, clamp means are provided at both ends of the rail so that a workpiece is held more firmly.

The rail preferably includes a plurality of recesses along its length for engagement by a detent carried by the frame to hold the frame in a particular position for drilling. By providing recesses at predetermined distances along the rail, the frame can be locked in these predetermined positions so that accurate drilling can be achieved.

The detent is preferably biased into engagement with the rail, and hence the recesses, so that when the detent reaches a recess it automatically attempts to engage the recess.

Each recess may include a cover which, when raised, prevents the detent from entering the recess. Such covers may be particularly useful when the position of the frame is being controlled by a computer instructing a motorised drive. In such an arrangement, the frame may move along the rail and engage automatically a recess which does not have its cover raised.

Preferably the drive means include a motor and a gear box slidably mounted on rods attached to the frame so that the drill bits driven by the motor can be plunged through the frame into a workpiece.

A specific embodiment of the present invention is now described, by way of example only, with reference to the accompanying drawings, in which:-
Figure 1 is a schematic side view of a multiple hole drilling system according to the present invention wherein the frame in locked in a particular position on the rail;
Figure 2 is a schematic plan view of the drilling system of Figure 1; and
Figure 3 is a schematic plan view of an end of the rail showing a workpiece abutting the end stops.

With reference to the drawings, a multiple hole drilling system 1 comprises a frame 3 mounted on a rail 5 via four runners 7 engaging tracks formed in the rail 5. Each runner 7 is mounted on the frame 3 and comprises a ball bearing race 9 to allow essentially free running of the frame 3 along the rail 5.

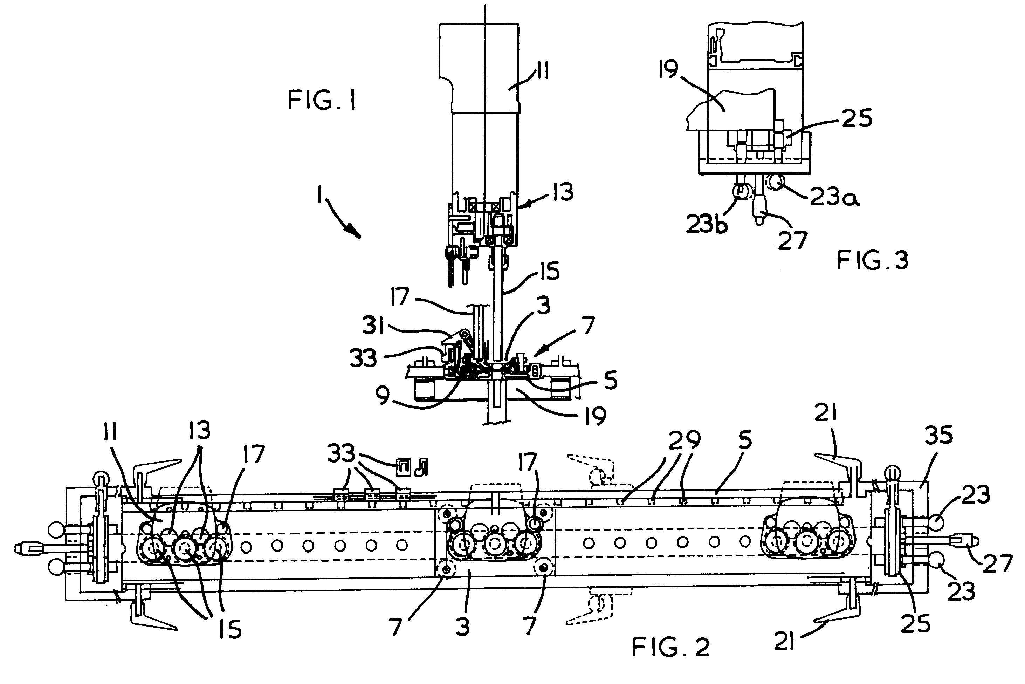

A motor 11 and gear box 13 are used to drive a plurality (usually three) of drill bits 15. The motor 11 and gear box 13 are slidably mounted on a pair of rods 17 fixed to the frame 3. As a result, the drill bits 15, when rotated by the motor 11 and gear box 13, can be plunged through the frame 3 and the rail 5 into a workpiece 19 situated below the rail 5 (cf. Figure 1).

By having the frame 3 mounted for movement along the rail 5, it is an easy matter to drill a plurality of holes in a workpiece situated below the rail 5 wherever on the workpiece it is desired to do so. With this in mind, to ensure that a workpiece is held firmly and in position relative to the rail 5, a pair of clamps 21 is positioned at each end of the rail 5. Alternatively, a pair of stops 23 can be used to position a workpiece 19 as shown in Figure 3, wherein one stop 23a abuts one side of the workpiece and the second stop 23b abuts an adjacent side of the workpiece. Hence, a corner of the workpiece is accommodated by the two end stops 23.

The two end stops 23 are threadedly mounted through a block 25 which is itself mounted on the end of a screw threaded spindle 27. Hence, coarse positioning of the end stops 23 can be achieved by adjustment of the handle 27 prior to fine adjustment of the end stops 23 via threaded engagement of the block 25.

Once a workpiece has been positioned accurately relative to the frame 5, it is desirable to position the frame 3 accurately relative to the rail 5. With this in mind, the rail 5 includes a plurality of recesses 29 along its length which can be engaged by a detent 31 pivotally mounted on the frame 3 (cf. Figure 1). Each recess 29 may include a cover 33, three of which are shown clipped in position in Figure 2. If a cover is positioned fully within its recess 29, as shown in Figure 1, the detent 31 can engage the recess 29 to hold the frame 3 at a particular position on the rail 5. Holes can then be drilled in a workpiece positioned below the rail 5. Alternatively, if a cover 33 is raised, the cover 33 prevents the detent 31, which is spring biased towards the recesses 29, from entering the recess 29 thereby preventing the frame 3 from being held in that particular position on the rail 5. Accordingly, specific positions for drilling can be predetermined by positioning the covers 33 as desired, before the drilling of a workpiece commences. A plurality of workpieces can then be drilled in exactly the same places simply by using the same recesses for dictating the positions of the frame 3 on the rail 5.

In another embodiment not shown in the drawings, a motorised drive can be mounted on the frame 3 for driving the frame 3 along the rail 5. In such an embodiment, a computer or microprocessor can be programmed to instruct the motorised drive to move the frame 3 between a plurality of predetermined positions for drilling, so that an automatic drilling program can be effected. Such an arrangement may be particularly suited to a manufacturing application, in a factory for example, wherein numerous numbers of workpieces need to be drilled in exactly the same way.

If necessary, additional clamps 21 can be used along the length of the rail 5, as shown in dotted lines in Figure 2. Furthermore, an end cap 35 accommodating the end stops 23 can be of any size and may be extendable away from the remainder of the rail 5 to accommodate a larger workpiece, for example. Numerous other arrangements will of course be appreciated by a man skilled in the art, without departing from the scope of the present invention.

It will of course be understood that the present invention has been described above purely by way of example, and that modifications of detail can be made within the scope of the invention.

## Claims

1. A multiple hole drilling system comprising a frame, drive means mounted on the frame for driving a plurality of drill bits into a workpiece to produce drill holes and a rail, wherein the frame is mounted on the rail for movement along the rail substantially perpendicularly to the axis of the drill bits.

2. A system as claimed in claim 1, wherein runners are provided for supporting the frame on the rail.

3. A system as claimed in claim 2, wherein the runners comprise ball bearing races mounted on the frame.

4. A system as claimed in any preceding claim, wherein a motorised drive is provided for moving the frame along the rail.

5. A system as claimed in any preceding claim, wherein the position of the frame along the rail is dictated by a computer.

6. A system as claimed in any preceding claim, wherein stop means are provided at an end of the rail against which a workpiece abuts during drilling.

7. A system as claimed in claim 6, wherein the stop means include a pair of stops, the position of each stop being adjustable.

8. A system as claimed in any preceding claim, wherein clamp means are provided at an end of the rail for gripping a workpiece during drilling.

9. A system as claimed in claim 8, wherein clamp means are provided at both ends of the rail.

10. A system as claimed in any preceding claim, wherein the frame can be locked to the rail at a plurality of predetermined positions along the rail.

11. A system as claimed in claim 10, wherein the rail includes a plurality of recesses along its length for engagement by a detent carried by the frame to hold the frame in a particular position for drilling.

12. A system as claimed in claim 11, wherein the detent is biased into engagement with the rail, and hence the recesses.

13. A system as claimed in claim 11 or claim 12, wherein each recess includes a cover which, when raised, prevents the detent from entering the corresponding recess.

14. A system as claimed in any preceding claim, wherein the drive means include a motor and a gear box slidably mounted on rods attached to the frame so that the drill bits driven by the motor can be plunged through the frame into a workpiece.
